# EUROPEAN PATENT APPLICATION

(11) **EP 1 542 048 A1**
(43) Date of publication of application: **15.06.2005**
(21) Application number: 04292952.1
(22) Date of filing: 10.12.2004
(51) Int. Cl.: G02B 6/42

(54) **Micro collimating lens system for optical communication**

(30) Priority: 12.12.2003 KR 2003090771
(71) Applicant: LG ELECTRONICS INC., Seoul (KR)
(72) Inventor: Kwon, Hyouk, Gwanak-gu Seoul (KR); Yee, Young-Joo, Bundang-gu Seongnam, Gyeonggi-do (KR); Lim, Tae-Sun, Suwon Gyeonggi-do (KR)
(74) Representative: Loisel, Bertrand

(57) **Abstract**

A micro collimating lens system for optical communication includes: an optical fiber (20) aligned on a silicon substrate (10) in a certain direction for transmitting an optical signal (50); and at least two lenses (30,40) aligned on the silicon substrate in order that the optical signal can be collimated at multiple stages, so that efficiency in assembling the lens system for collimating the optical signal is improved and a fabrication cost is reduced.

## Description

### BACKGROUND OF THE INVENTION

### 1. Field of the Invention

The present invention relates to a micro collimating system for optical communication, and more particularly, to a micro collimating system for optical communication used as an interface device of an optical communication network which is easy to fabricate and is constructed to reduce unit cost of fabrication.

### 2. Description of the Background Art

Recently, the technology related to information has made rapid progress together with the development of the high-speed technology of communications using optical fibers which are capable of transmitting/receiving much information. In particular, as multimedia information including various types of data such as a moving image, an audio signal and a text signal is transmitted at high speed, a two-way interactive communications environment is constructed, and users are tremendously increased, the communications network using previously available copper line is faced with a limit. The communications network having a form of an optical signal which has high carrier frequencies has been proposed as an alternative plan.

In case of an optical communication network using such light as a signal for transmitting information, an interface connecting a user with a repeater or with a communications provider should be constructed as an optical connector module instead of a logic integrated circuit having been applied to the communications network using the existing copper line.

The optical connector module, a data interface for the optical communication network, includes a line made of optical fibers; an optical receiving module used to receive an optical signal; an optical transmitting module used to transmit an optical signal; and an optical relay module used to relay an optical signal. However, since the optical connector module requires precision processing and close assembling, its manufacturing cost is high.

In addition to this, the optical connector module should meet requirements as follows: low power consumption, lightness and smallness for easy handling, and excellence of mechanical and optical characteristics. However, it is difficult to manufacture a module which satisfies such requirements.

In order to overcome such a limit, precise parts for optical fiber communication which use a semiconductor fabrication process and the micromachining technique have been researched and manufactured.

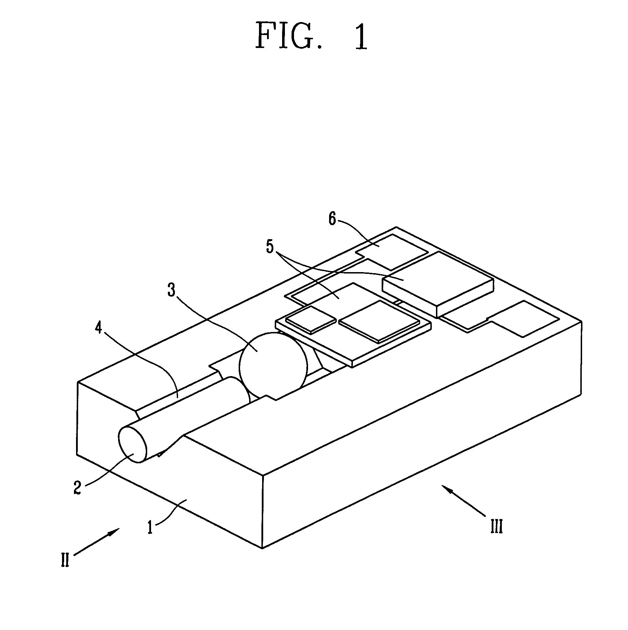

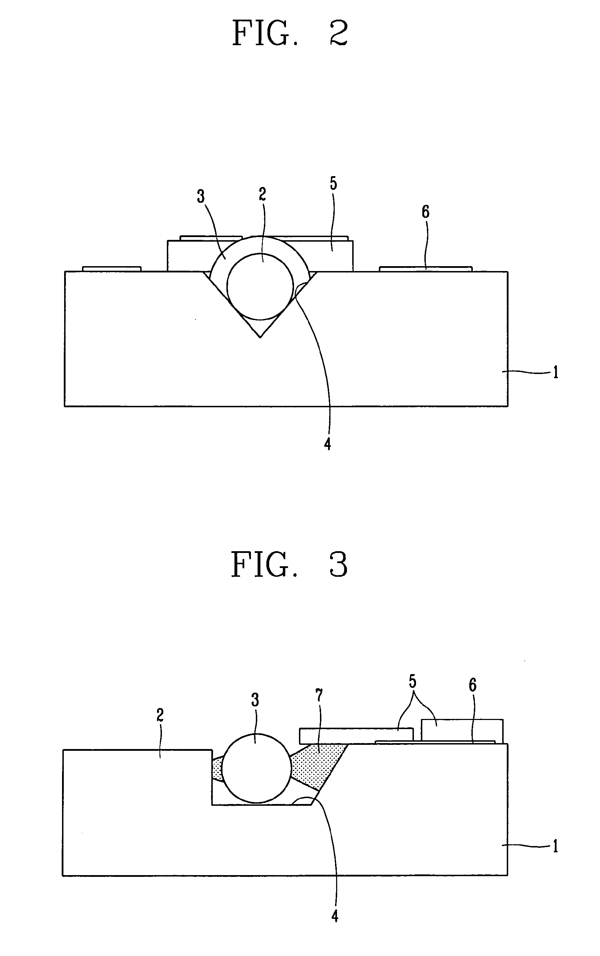

Figures 1 and 2 show the conventional micro collimating lens system for optical communication, as an optical communication module device, using a micro spherical lens. Figure 1 is a perspective view showing a construction of the conventional micro collimating lens system for optical communication using a micro spherical lens. Figure 2 is a side view of Figure 1 in the direction II, and Figure 3 is a side view of Figure 1 in the direction III.

As shown therein, the conventional micro collimating lens system for optical communication includes: a silicon substrate 1; a supporting groove 4 formed on the silicon substrate 1; an optical fiber 2 fixed to the supporting groove for transmitting an optical signal 7; a spherical lens 3 separated from one end of the optical fiber 2 by a predetermined distance and installed at the supporting groove 4 in order that the optical signal 7 from the optical fiber 2 can be collimated; light receiving elements 5 formed on the silicon substrate 1 and assembled by methods such as soldering; and electric wiring 6 for providing the power to the light receiving elements 5.

An operation of the conventional micro collimating lens system for optical communication will be briefly described as follows.

When the optical signal 7 transmitted through the optical fiber 2 passes through the spherical lens 3, it is collimated in a horizontal and vertical direction with respect to the silicon substrate 1. As the collimated optical signal 7 passes through the spherical lens 3, the amount of the light is increased and is made incident upon the light receiving elements 5. Therefore, efficiency in transmitting the optical signal is improved.

However, since the spherical lens used in the conventional micro collimating lens system for optical communication is a micro lens of which diameter is less than 1 mm, efficiency of assembly is noticeably lowered when mounting the spherical lens at the micro collimating lens system.

In addition, the spherical lens is so expensive that the manufacturing cost of the collimating lens system for optical communication is entirely increased.

### SUMMARY OF THE INVENTION

Therefore, an object of the present invention is to provide a micro collimating lens system for optical communication used as an interface device of an optical communication network which is easy to fabricate and is constructed to reduce unit cost of fabrication.

To achieve these and other advantages and in accordance with the purpose of the present invention, as embodied and broadly described herein, there is provided a micro collimating lens system for optical communication, comprising: an optical fiber aligned on a silicon substrate in a certain direction for transmitting an optical signal; and at least two lenses aligned on the silicon substrate in order that the optical signal can be collimated at multiple stages.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a perspective view showing a construction of the conventional micro collimating lens system for optical communication using a spherical lens;
Figure 2 is a side view of Figure 1 in the direction II;
Figure 3 is a side view of Figure 1 in the direction III;
Figure 4 is a perspective view showing the micro collimating lens system for optical communication in accordance with one embodiment of the present invention;
Figure 5 is a side view showing an important construction of the micro collimating lens system for optical communication in accordance with one embodiment of the present invention; and
Figure 6 is a front view showing the important construction of the micro collimating lens system for optical communication in accordance with one embodiment of the present invention.

### DETAILED DESCRIPTION OF THE PREFERRED EMBODIMENTS

Hereinafter, reference will now be made in detail to the preferred embodiments of a micro collimating lens system for optical communication of the present invention, examples of which are illustrated in the accompanying drawings.

In addition, it should be understood that the above-described embodiments are not limited by any of the details of the foregoing specific embodiment, unless otherwise specified, but rather should be construed broadly within its spirit and scope as defined in the appended claims.

Hereinafter, a micro collimating lens system for optical communication in accordance with one embodiment of the present invention will be described in detail with reference to the accompanying drawings.

However, when describing the present invention, a detailed description with respect to well known technique or construction will be omitted in order to clearly show the gist of the present invention.

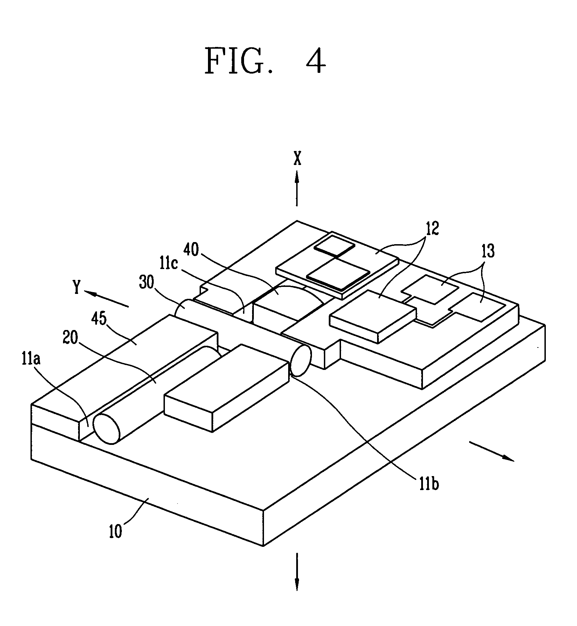

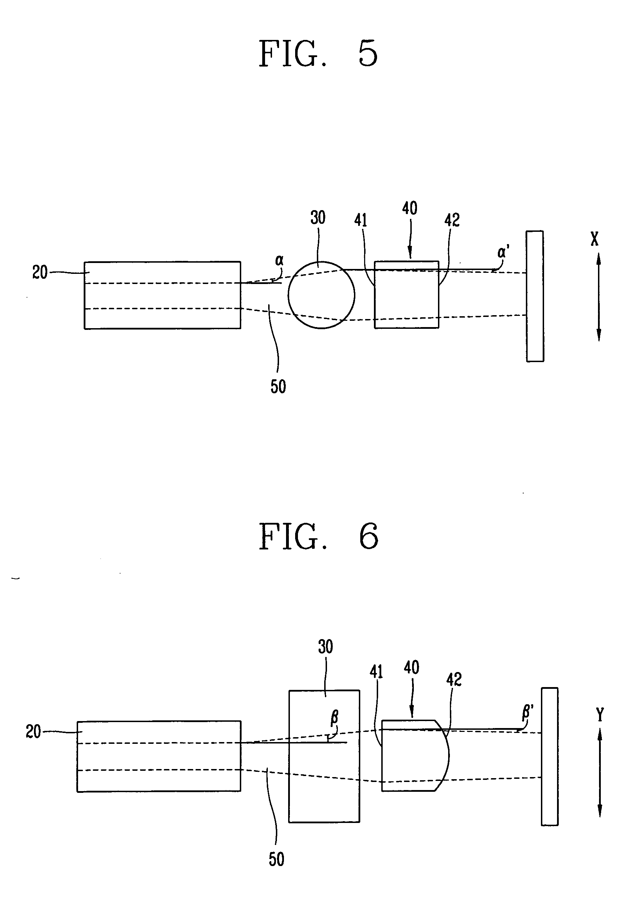

Figures 4 to 6 show a micro collimating lens system for optical communication in accordance with one embodiment of the present invention. Figure 4 is a perspective view showing the micro collimating lens system for optical communication in accordance with one embodiment of the present invention, Figure 5 is a side view showing an important construction of the micro collimating lens system for optical communication in accordance with one embodiment of the present invention, and Figure 6 is a front view showing the important construction of the micro collimating lens system for optical communication in accordance with one embodiment of the present invention.

As shown therein, the micro collimating lens system for optical communication in accordance with one embodiment of the present invention includes: an optical fiber 20 aligned on a silicon substrate 10 in a certain direction for transmitting an optical signal 50; and two lenses 30 and 40 aligned on the silicon substrate 10 in order that the optical signal 50 from the optical fiber 20 can be collimated at multiple stages.

Most preferably, the lenses 30 and 40 comprise a fist lens 30 aligned perpendicularly to a direction in which the optical signal 50 advances such that the optical signal 50 diverged from the optical fiber 10 can be collimated in one axial direction and a second lens 40 aligned parallel to the direction in which the optical signal 50 advances such that the optical signal having passed through the first lens 30 and thus been collimated in one axial direction can be collimated in another axial direction perpendicular to one axial direction in which the optical signal 50 has been collimated.

That is, as light coming from the optical fiber 20, that is, the optical signal 50 passes through the two lenses 30 and 40, a degree of divergence is reduced.

More in detail, when the optical signal 50 from the optical fiber 20 passes through the first lens 30, a vertical divergence angle of the optical signal diverged in a direction (direction of axis X) perpendicular to the silicon substrate 10 on the basis of the axis of the optical fiber 20 is reduced. That is, as shown in Figure 5, the vertical divergence angle of the optical signal 50 is reduced from α to α'. In addition, when the optical signal 50 passes through the second lens 40, a horizontal divergence angle of the optical signal 50 diverged in a direction (direction of axis Y) horizontal to the silicon substrate 10 on the basis of the axis of the optical fiber 20 is reduced. That is, as shown in Figure 6, the vertical divergence angle of the optical signal 50 is reduced from β to β'.

As the optical signal 50 from the optical fiber 20 passes through the first lens 30 and the second lens 40, the divergence angles of the optical signal 50 are reduced in two axial directions (axis X and Y), respectively, perpendicular to the silicon substrate. Accordingly, the optical signal 50 is effectively collimated.

The first lens 30 is formed to have a certain radius of curvature in the direction (direction X) perpendicular to the silicon substrate 10.

The first lens 30 is preferably aligned perpendicularly to a direction in which the optical fiber 20 is aligned, separated from the optical fiber 20 by a certain distance and formed as a cylindrical shape having a certain length. An optical fiber is typically used as materials of the first lens. Accordingly, a size of the lens can be enlarged, which makes alignment much easier.

As for the second lens 40, one surface 41 which receives the optical signal 50 having passed through the first lens 30 is flat and another surface 42 from which the optical signal 50 goes out is formed to have a certain radius of curvature in the direction (direction of axis Y) horizontal to the silicon substrate 10.

In addition, the second lens 40 is preferably formed of polymer materials.

The first lens 30 and the second lens 40 are aligned on the silicon substrate along a path to which light advances. In order to align parts according to the path to which light advances, a mounting layer 45 having an aligning groove structure is formed on the silicon substrate 10.

Aligning grooves 11a, 11b and 11c formed at the mounting layer 45 and mounted to align the optical fiber 20, the first lens 30 and the second lens 40 are formed simultaneously when forming the mounting layer 45.

In addition, the mounting layer 45 is preferably made of a polymer, which is a material identical to the material of the second lens 40.

That is, since the mounting layer 45 and the second lens 40 are formed of the same materials, it is possible to form the second lens 40 simultaneously with the aligning grooves 11a, 11b and 11c while the mounting layer 45 is patterned.

More in detail, the second lens 40 and the mounting layer 45 are formed by patterning a thick photoresist film formed at the silicon substrate 10 by a photolithography process. In addition, the second lens 40 and the mounting layer 45 can be also formed by patterning a film made of a photo sensitive polymer which has been formed at the silicon substrate 10 by the photolithography.

As the aligning groove structure is formed, parts to be installed on the silicon substrate 10 can be precisely aligned in three axial directions of X, Y and Z, respectively and passive alignment can be also easily done.

Light receiving elements 12 for receiving the optical signal 50 from the second lens 40 are formed on the mounting layer 45, and electric wiring 13 is formed to connect them electrically.

Simple operation of the micro collimating lens system in accordance with the one embodiment of the present invention having such construction will be described as follows.

The optical signal 50 outputted from the optical fiber 20 passes through the cylindrical first lens 30 installed on the silicon substrate 10 in a direction perpendicular to the direction in which the optical signal 50 advances. At this time, as shown in Figure 5, the divergence angle of the optical signal 50 being diverged is reduced in the direction (direction of axis A) perpendicular to the surface of the silicon substrate 10. The optical signal 50 having passed through the first lens 30 passes through the second lens 40 made of polymer materials installed on the silicon substrate 10 parallel to the direction in which the optical signal 50 advances. At this time, as shown in Figure 6, the divergence angle of the optical signal 50 is reduced again in the direction (direction of axis Y) horizontal to the surface of the silicon substrate 10. As passing through the first lens 30 and the second lens 40 sequentially, the optical signal 50 is collimated at two stages and light efficiency is raised by increasing light flowing into the light receiving elements 12.

As so far described, in order to collimate the optical signal outputted from the optical fiber, the micro collimating lens system for optical communication in accordance with the present invention is provided with the micro first lens having a certain size in the cylindrical shape, installed at the silicon substrate and the second lens installed, following the first lens so as to facilitate alignment and installation using the micromachining, so that the divergence angles of the optical signal are reduced by sequential multiple stages. Accordingly, without using the conventional spherical lens which is hard to fabricate and install, the same results can be obtained.

In addition, in the micro collimating lens system for optical communication in accordance with the present invention, an aligning groove structure for passively aligning an optical fiber, a lens or the like is not formed on the silicon substrate through etching, but is formed on the silicon substrate with a polymer-based film. At the same time, the second lens is also formed of polymer materials identical to materials of the aligning groove structure, and thus the aligning groove structure and the second lens can be simultaneously formed. Accordingly, since the following aligning process which is complicating like the conventional spherical lens is unnecessary, installation becomes very simplified, assembly of the collimating lens system becomes entirely easy, and its fabrication cost is also reduced.

In addition, because the micro collimating lens system for optical communication is a device for an optical communication module fabricated by a semiconductor process, it can be used to transmit/receive or relay an optical signal in a WDM (wavelength-division-multiplex) optical network and be applied to another optical interface device used to the optical communication network.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A micro collimating lens system for optical communication comprising:
an optical fiber aligned on a silicon substrate in a certain direction for transmitting an optical signal; and
at least two lenses aligned on the silicon substrate in order that the optical signal is collimated at multiple stages.

2. The system of claim 1, wherein the lenses comprise:
a first lens aligned perpendicularly to a direction in which the optical signal advances in order that the optical signal diverged from the optical fiber is collimated in one axial direction; and
a second lens aligned parallel to the direction in which the optical signal advances in order that the optical signal having passed through the first lens and thus been collimated in one axial direction is collimated in another axial direction perpendicular to one axial direction in which the optical signal has been collimated.

3. The system of claim 2, wherein a vertical divergence angle of the optical signal diverged in a direction perpendicular to a surface of the silicon substrate on the basis of the axis of the optical fiber is reduced when the optical signal passes through the first lens, and a horizontal divergence angle of the optical signal diverged in a direction horizontal to the silicon substrate on the basis of the axis of the optical fiber is reduced when the optical signal passes through the second lens.

4. The system of claim 3, wherein the first lens is formed to have a certain radius of curvature in the direction perpendicular to the silicon substrate.

5. The system of claim 4, wherein the first lens is aligned perpendicularly to the direction in which the optical fiber is aligned, separated from the optical fiber by a certain distance, and formed as a cylindrical shape having a certain length.

6. The system of claim 5, wherein the first lens is an optical fiber.

7. The system of claim 3, wherein one surface of the second lens into which the optical signal having passed through the first lens comes is flat and another surface of the second lens from which the optical signal goes out has a certain radius of curvature in the direction horizontal to the silicon substrate.

8. The system of claim 7, wherein the second lens is formed of a polymer.

9. The system of claim of 8, wherein a mounting layer having an aligning groove structure for aligning the optical fiber, the first lens and the second lens is formed on the silicon substrate.

10. The system of claim 9, wherein the mounting layer is formed of the polymer which is a material of the second lens.

11. The system of claim 10, wherein the mounting layer and the second lens are formed by being simultaneously patterned.

12. The system of claim 10, wherein the second lens and the mounting layer are formed by patterning a thick photoresist film formed on the silicon substrate by a photolithography process.

13. The system of claim 10, wherein the second lens and the mounting layer is formed by patterning a photo sensitive polymer formed on the silicon substrate by a photolithography process.
